# EUROPEAN PATENT APPLICATION

(11) **EP 4 769 186 A1**
(43) Date of publication of application: **01.07.2026**
(21) Application number: 25184061.7
(22) Date of filing: 19.06.2025
(51) Int. Cl.: G06F 21/31, G06F 21/32, G06V 40/40, H04L 9/40

(54) **INDUCTIVE LIVENESS ASSESSMENT SYSTEM AND METHODOLOGY**

(30) Priority: 30.12.2024 US 202419005133
(71) Applicant: Socure, Inc., Incline Village, NV 89451 (US)
(72) Inventor: XIAO, Feng, Incline Village, 89451 (US); LEVINE, Eric, Incline Village, 89451 (US); SAXENA, deepanker, Incline Village, 89451 (US); CHAVEZ, Ambar, Incline Village, 89451 (US); LIU, Che-Bin, Incline Village, 89451 (US); ABREU, Pablo Ysrrael, Incline Village, 89451 (US)
(74) Representative: Derry, Paul Stefan

(57) **Abstract**

A system and methodology is provided in which inductive liveness techniques are employed to conduct identity verification operations. These techniques may include a wide variety of signals generated by an identity verification application and which are caused to be implemented on a user device such that a live person is stimulated and/or encouraged to respond in a way that is detectable via the device and which may be processed by the identity verification application to assess the likelihood of the user actually being a live person. These signals may include various non-overt prompts stimulating the user to respond in ways such as predictable eye movements, predictable blinking, predictable head or body movements in the context of selfie alignments as well as many other signals.

## Description

### FIELD OF THE DISCLOSURE

Disclosed embodiments relate generally to systems and methodologies associated with identity verification conducted remotely and more specifically to solutions directed to identity verification using liveness methodologies which are accurate and resistant to fraudulent activities.

### BACKGROUND

The conduct of online financial transactions and other online transactions where identity verification is critical, or at least desirable, is commonplace. When individuals seek to execute online transactions where money, reputation, information access and/or other matters of a sensitive nature are at stake, it is typically required that, prior to permitting the transaction to proceed, the identity of the individual seeking to execute the transaction is verified to confirm that the person is who they say they are. There are numerous regulatory requirements dictating the level and type of verification required but it is also important to verify identity in many types of transactions to ensure that fraudulent conduct is prevented to the extent possible even where regulatory control does not exist.

There are many different techniques for performing identity verification in an online environment including implementations requiring the input of user ids and passwords, two factor authentication techniques, biometric authentication as well as many others. One relatively new class of identity verification solutions is liveness. The ability to perform liveness verifications is enhanced as a result of more powerful cameras and image capture hardware and software resident on devices such as smartphones, tablets and laptop computers. Also the availability of increasing processing power on both the device side and the application server side provides the basis for implementation of more resource heavy liveness implementations than have been possible in the past.

There currently exists two primary categories of liveness implementations for identity verification. The first category of implementations are generally referred to as "passive liveness" techniques. These implementations are typically carried out by initiating a single shot photograph of the individual user via the device that the user is using (e.g. a smartphone with embedded camera) in attempting to execute the desired transaction. In most cases, the photograph consists of a normal head-on selfie and the liveness check is performed on the single frame with an attempt to detect and prevent non-live presentation attacks such as where a fraudster seeks to use photographs and/or screen images in place of a live and actual real time photograph of the user's face. Additional techniques such as analyzing light reflection, texture and or depth of the captured image can be used in connection with passive liveness implementations in order to detect the fraudulent use of photo or screen images in place of a real, live face of the user.

While passive liveness techniques serve their purpose in some use cases, they do suffer from some drawbacks. They do tend to offer a good user experience due to requiring a short and limited interaction between the user and the application for the conduct of the verification process. Also, they benefit from a relatively lower resource use requirement due to the use, typically, of only a single image capture and the processing thereof as opposed to the requirement to analyze a large number of video frames, for example.

A second category of liveness implementations for liveness detection in the context of identity verification is referred to as "active liveness". In this case, the user is typically asked to comply with one or more instructions communicated by the application in order to confirm that they are truly a live person who can react to the communicated instructions in real time or close to real time. Examples of commands which may be issued include dictating that the user turn his or her head, emoting in some way such as smiling or frowning, blinking and/or reading some text out loud into the device microphone. The data captured might be a series of single image frames, a short video (small set of image frames) or a full video.

While active liveness solutions provide the benefits of being relatively more accurate and less susceptible to fraud attacks than passive liveness solutions, they do also suffer from a number of drawbacks. For one, the user experience can be less than desirable in that it requires more activity than the user cares to engage in and/or takes too long of a time period to complete the verification process. In addition, active liveness solutions can also be resource intensive in that a relatively large data set of images, sound, etc. may be required to be processed and analyzed in order to make identity verification decisions. As such, additional processing time and resources may be required to complete identity verification determinations using active liveness techniques.

Thus, as will be understood, there is a need for a system and methodology in which the drawbacks of both passive liveness and active liveness solutions can be minimized or eliminated. It is desirable to provide a solution for identity verification using existing user operated devices including embedded cameras and microphones to achieve accurate identity verification determinations while maintaining a good user experience and also minimizing the burden on computing and communication resources to the extent possible.

### SUMMARY OF THE INVENTION

It is to be understood that both the following summary and the detailed description are exemplary and explanatory and are intended to provide further explanation of the present embodiments as claimed. Neither the summary nor the description that follows is intended to define or limit the scope of the present embodiments to the particular features mentioned in the summary or in the description. Rather, the scope of the present embodiments is defined by the appended claims.

Embodiments may include a method and system which combines a friendly user experience with high accuracy in connection with the conduct of remote identity verification determinations which may be employed in connection with proposed online transactions and other limited-access online operations.

According to the teachings herein, the disclosed method and system can enhance the user experience such that the user interaction appears to be a passive liveness operation because no specific commands are dictated to the user. However, in actuality, the benefits of active type liveness operations are achieved through the use of natural cues and stimuli that encourages the users to respond in some way that is detectable by the user device and the supporting identity verification application.

The system and methodology of the present invention, in some embodiments, may initiate one or a combination of signals as opposed to overt directives to the user, in order to stimulate a physical manifestation in the user that is detectable by the user device and the supporting identity verification application. The initiation of these signals and the detection of and processing of the user response thereto are, in turn, used to confirm user liveness in the context of identity verification.

In some embodiments, the system and methodology of the present invention may operate to achieve the best aspects of both passive and active liveness techniques while eliminating and/or minimizing the drawbacks of each of them. The system and methodology of the present invention thus operates between the characteristics of passive and active liveness and is less invasive than overt directives in an active implementation (hence a better user experience) but is more engaging and complete in analysis (hence better accuracy). According to the teachings of the present invention, this novel form of liveness implementation is referred to herein as "inductive liveness".

The system and methodology of the present invention, in some embodiments, may implement these inductive liveness techniques and methodologies in a way that is very effective in thwarting fraudulent identity verification attempts such as when short, pre-made videos are used in place of an actual, live person during the verification process.

According to the teachings of the present invention, a system and methodology is provided in which inductive liveness techniques are employed to conduct identity verification operations. These techniques may include a wide variety of signals which are caused to be implemented on a user device by an identity verification application such that a live person is stimulated and/or encouraged to respond in a way that is detectable via the device and which may be processed by the identity verification application to assess the likelihood of the user actually being a live person. These signals may include various non-overt prompts stimulating the user to respond in ways such as predictable eye movements, predictable blinking, predictable head or body movements in the context of selfie alignments as well as many other signals.

### BRIEF DESCRIPTION OF THE DRAWINGS

**Figure 1** is a diagram depicting the major components of the system of the present invention, including various elements with which the system of the present invention may interact, in some embodiments thereof;
**Figure 2** is a flowchart illustrating the major steps implemented by the system of the present invention using inductive liveness methodologies in connection with identity verification, in some embodiments thereof;
**Figure 3** is an illustration demonstrating an exemplary inductive liveness signal implementing gaze redirection based on object movement in accordance with the teachings of the present invention;
**Figure 4** is an illustration demonstrating an exemplary inductive liveness signal implementing selfie distance adjustment in accordance with the teachings of the present invention; and
**Figure 5** is an illustration demonstrating an exemplary inductive liveness signal implementing adjustment to random initial offsets in accordance with the teachings of the present invention.

### DETAILED DESCRIPTION OF THE INVENTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. The skilled artisan will appreciate that a particular feature, structure, or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, it is apparent that the present embodiments can be carried out in a variety of ways, and does not require any of the specific features described herein. Also, well-known functions or constructions are not described in detail since they would obscure the present embodiments with unnecessary detail.

The description is not to be taken in a limiting sense, but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

Aspects of the present disclosure are directed to a system and methodology wherein inductive liveness actions are implemented in connection with identity verification determinations. In this way, one or more prompts are provided either sequentially or in parallel in order to encourage the user at a device to take one or more actions that can be detected by the system and used for the purpose of assessing the likelihood that the person interacting with the system via the user device is a live person interacting with the system in real time. These prompts and the analysis of the actions can be combined with other techniques such as facial recognition and other methodologies to determine if the person is both live and likely to be who they say they are.

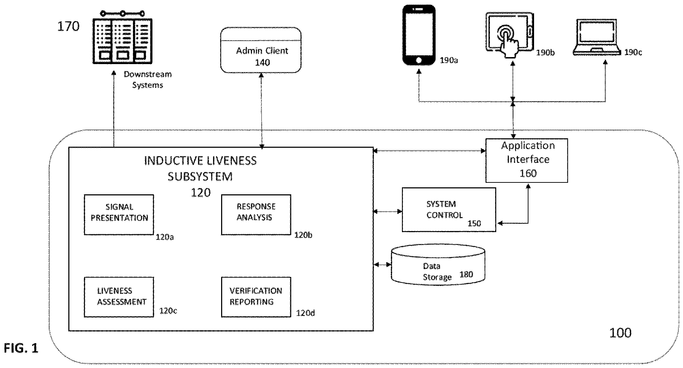

Referring now to FIG. 1, there is illustrated an Inductive Liveness Assessment System (ILAS) 100 according to one or more embodiments herein. ILAS 100 may reside on a single cloud based server although it is also possible for various components of ILAS 100 (as described herein) to reside on separate servers. By way of example, ILAS 100 may be a computer implemented application which resides on a computing server. As will be apparent from the discussion herein, ILAS 100 may include and/or implement all appropriate software and/or hardware for carrying out its inductive liveness assessment functionalities and related capabilities. Operation of ILAS 100 is under the control of system control 150.

ILAS 100 preferably includes Inductive Liveness Subsystem (ILS) 120, which itself is comprised of a number of modules as discussed further herein. ILS 120 operates to determine one or more signals/prompts to initiate at a user device 190 and then assess user response to make liveness determinations as more fully described herein. User devices 190 may comprise one or more of any known device through which a user may provide input and see outputs on a screen. In preferred embodiments, user device 190 include a camera function which provides single image captures as well as multi-image captures and video capture. Examples of user devices 190 may include, without limitation, smartphones, tablets, desktop and laptop computers, gaming consoles and the like. Preferably, user device 190 also includes a display screen through which images, elements, photos, text, emojis, emoticons and other display elements may be presented to the user using user device 190. It is also preferable that the camera functionality embodied in user device 190 be capable of detecting user movements in response to the presentation of display elements on the display screen. This may include, for example, user eye movements, user face movements, user body movements, user head movements, user positioning, and other aspects of the user's appearance and actions both statically and dynamically in response to inductive liveness signals as more fully described herein.

The communication link between user devices 190 and ILAS 100 may be via a wireless protocol such as via a cellular network and/or a Wi-Fi network or other wireless protocol. A wired communication link is also possible. User devices 190a, 190b and 190c may communicate with ILAS 100 via application interface 160. Application interface 160 may comprise one or more application programming interfaces (APIs) that permit applications associated with user devices 190 to communicate with ILAS 100.

ILAS 100 may be accessed, in some embodiments, by an administrative client 140 for the purpose of administrating the operation of the ILAS 100 including how and when parameters are set including the selection, timing and combination of signals presented to users as well as thresholds for verification and liveness confirmation. Administrative client 140 may also be used to control various other operational aspects associated with liveness confirmation and identity verification. Admin client 140 may comprise a personal computer, a laptop, a handheld computing device such as a smartphone or a tablet or any other similar device.

ILAS 100 may reside on one or more physical servers. These servers may include data storage, one or more processors, and/or other components. The servers may also include communication lines, or ports to enable the exchange of information with a network and/or other computing platforms. The servers may include a plurality of hardware, software, and/or firmware components operating together to provide the functionality attributed herein to ILAS 100.

Data storage 180 associated with the servers may comprise non-transitory storage media that electronically stores information. The electronic storage media of electronic storage may include one or both of system storage that is provided integrally (i.e., substantially non-removable) with servers and/or removable storage that is removably connectable to the servers via, for example, a port or a drive.

Data storage 180 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Data storage 180 may store software algorithms, information determined by processors, images, videos, information received from servers, information received from devices 190 and admin client 140 as well as other data which is used to make liveness confirmations and/or perform identity verification.

While an exemplary architecture is described above, it will readily be understood by one of skill in the art, that an unlimited number of architectures and computing environments are possible while still remaining within the scope and spirit of the present embodiments.

Returning now FIG. 1 and to the specific components of ILAS 100, ILAS 100 may comprise Inductive Liveness Subsystem (ILS) 120 which may communicate with any or all of data storage 180, admin client 140, application interface 160 and downstream systems 170 under the control of system control 150. ILS 120 also communicates with user devices, as required, via application interface 160.

ILS 120 includes various components which are described hereinbelow. Operation(s) of each of these components will be described at a high level now and then in further detail later in the present disclosure. Signal presentation module 120a functions to determine the selection and sequence of signals presented to users and implemented on user devices 190. These signals are described in further detail below and include the presentation of various effects on the display screen and/or through the speaker of user device 190 in order to generate a user response. Signal selection and sequencing may be adjusted on a user by user basis or on a global basis across users or signals sequencing and selection may vary based on other factors such as user class, the underlying reason for performing identity verification/liveness confirmation, time of day, type of device, verification thresholds as well as many others.

This user response to the signals presented is transmitted to ILS 120 via application interface 160 and response analysis module 120b functions to analyze the user response(s) in light of the signals presented to the user by signal presentation module 120a. Response analysis module 120b may analyze user responses on a signal by signal basis as they are implemented and received back from user devices 190 or user responses may be batched and analyzed collectively. In the former case, later user signals can be selected, at least to some extent, as a result of the analysis conducted on earlier signals. Response analysis component 120b may also operate with respect to various threshold and/or condition requirements and parameters provided to ILS 120 via admin client 140. For example, various threshold criteria for considering an individual signal being properly responded to in order to confirm liveness may be specified. Similarly, various threshold criteria for a minimum combined score to confirm liveness as a result of collective responses to multiple signals may also be specified and implemented.

Liveness assessment module 120c implements the aforementioned criteria in connection with the results generated by response analysis module 120b in order to make a determination for each user "transaction" whether or not liveness can be confirmed. Again, various thresholds and criteria can be set as parameters for making this determination. In some embodiments, machine learning techniques can be applied to assist with setting threshold criteria based on ILAS 100 receiving feedback from previous liveness and identity verification determinations and their real-world results.

Verification reporting module 120d of ILS 120 functions to use the determination from liveness assessment module 120c and possibly other information in order to report verification determinations as applicable. These determinations may be reported, for example, to downstream systems 170 which such systems may request liveness and/or verification determinations in connection with proposed transactions or other activities requiring such identity verification and/or liveness confirmation.

In some embodiments, ILAS 100 functions only to make liveness determinations and may report those determinations, for example, to downstream systems 170. Alternatively, ILAS 100 may also function to make overall identity verification determinations including liveness confirmations and report those to, for example, downstream systems 170. In this case, the identity verification process may include other steps for determining if the user is who they say they are beyond the liveness determination which indicates only that the user is presently a live person interacting with user device 190.

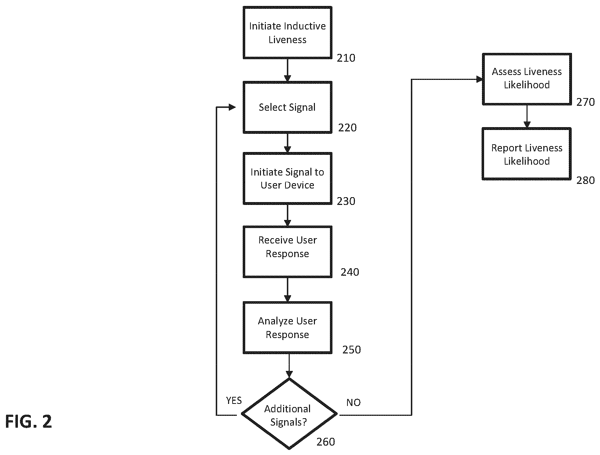

Turning now to FIG. 2 and in connection therewith, a more detailed discussion of the overall process for performing inductive liveness assessments according to the teachings of the present invention in some embodiments is now provided. At step 210, the inductive liveness assessment process is initiated. Next, at step 220, signal presentation module 120a selects an initial signal to present to the user via user device 190. Examples of possible signals which may be selected and presented to the user in connection with the inductive liveness assessment are discussed in more detail below.

Next, at step 230, the selected signal is initiated under the control of system control 150 and communicated to the user device 190 via application interface 160. The implementation of the signal may be performed by application interface 160 and/or an application or other software functionality resident on user device 190. At step 240, the user's response to the presented signal is transmitted back to ILAS 100 via application interface 160 and under the control of system control 150. The response may be, for example, an assessment of a user eye, body, iris or face, eye location or relative movement. Also, or alternatively, the response may be an audio response which is captured by a microphone integral to user device 190.

The user response is received by ILAS 100 at step 240 and analyzed by response analysis module 120b of ILS 120 at step 250. As mentioned above, this analysis may involve assessment of the received response versus one or more expected responses to the signal including whether the response is close enough to the expected response to meet or exceed a predetermined threshold.

At step 260, ILS 120 determines whether additional signals are to be presented to the user as part of the liveness assessment transaction or whether the last signal has been presented. If more signals are to be presented, processing returns to step 220 and continues from there. Otherwise, if the last signal has been presented, processing continues to step 270, where the overall liveness assessment associated with the specific transaction is made. This assessment may be performed by liveness assessment module 120c of ILS 120. As mentioned above, this assessment may be a collective assessment of multiple signals and whether or not the collective comparisons between expected responses and actual responses meets a specified threshold in order to qualify for a positive liveness determination wherein ILAS 100 determines that the user is an actual, live person interacting with the user device 100 in real time.

Finally, at step 280, ILAS 100 (and more specifically verification module 120d of ILS 120) reports the liveness determination one or more downstream systems 170. As mentioned above, the reporting may be solely as to a liveness determination. Alternatively, ILAS 100 may report an identity verification determination which may, in part, be based upon the liveness determination described herein. In this later case, the overall identity verification determination may rely on the liveness determination but also include other identity verification elements such as assessing a single photographic image provided by user device 190 as against a known image. Of course, other identity verification elements may be used as is known in the art while remaining within the scope and sprit of the present invention.

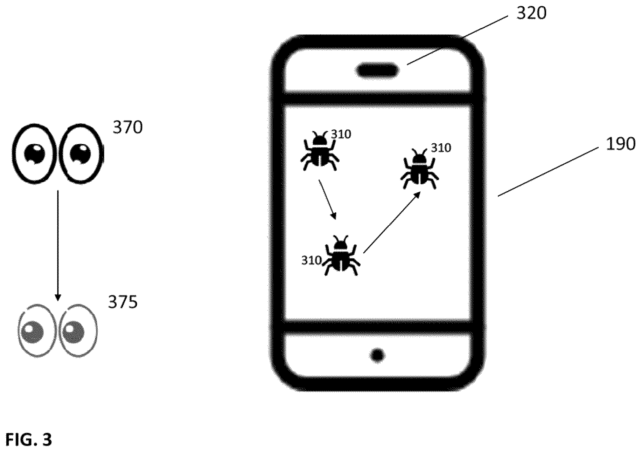

With reference now to FIG. 3, an exemplary gaze movement signal which may be presented on a user device 190 and the processing of a user response to that signal by ILAS 100 is now discussed. In this case user device 190 includes camera functionality 320 which is capable of monitoring the eye movement of the user operating user device 190 in connection with a liveness determination. The exemplary signal in this case is a small bug like symbol 310 which is caused to move about the display screen of user device 190 under the control of signal presentation module 120a. In response to this stimuli, it is expected that the user's gaze (i.e. eye movement) 370-375 will, at least to some degree, follow the movement of the bug like symbol 310 as it moves about the screen.

In some embodiments, camera 320, in connection with related processing of camera input by response analysis module 120b, can detect this eye movement 370-375 and attempt to match it with expected eye movement based on the movement, in real time, of bug like symbol 310. Liveness assessment module can make the determination as to whether the matching of actual movement vs expected movement is close enough to meet the predetermined threshold. If the threshold is met, ILAS 100 views that signal as being satisfied and this can be factored into an overall liveness assessment which may be comprised of a sequential set of signals being presented to the user during the liveness assessment transaction. Alternatively, multiple signals (possibly including one visual and one audio stimuli) can be presented in parallel and the user response for these multiple signals versus the expected response can then be assessed.

In connection with this exemplary signal, ILAS 100 may assess liveness based on the use of face detection technology, facial key points detection technology, iris detection technology and any combination thereof as well as other known applications for assessing eye movement. One such application that may be used in connection with the system and process of the present invention for the aforementioned functionality is Google MediaPipe available at: https://ai.google.dev/edge/mediapipe/solutions/guide.

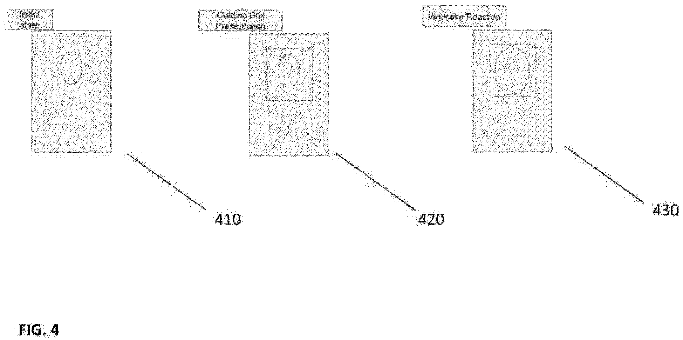

Turning now to FIG.4, another exemplary signal, this type associated with selfie distance adjustment, is now discussed. This signal is based on the assumption that human nature will typically result in a user seeking to center their face in a guiding box for a selfie based on an expected distance from the camera. If the box size is controlled by ILAS 100, a user's reaction to that size by moving their face relative to the position of the camera in the user device 190 can be assessed in connection with a liveness determination. So, for example, if the guiding box is presented to the user in a way that the face does not look "natural" in the guiding box, most users will then adjust the relative distance between their face and the camera lens before taking the selfie picture.

This can be seen by way of example in Fig. 4. There is an initial state 410 where the user's face appears on the screen with the size and position based on the user's face position relative to the camera lens. Then, ILAS 100 generates a guiding box (state 420) that is designed to stimulate the user to change the relative position between his or her face and the camera lens so as to fill the frame (state 430). According to the teachings of the present invention, this occurs on an "inductive" basis such that an express prompt to the user is not required or even desired. Instead, the user feels "uncomfortable" with the initial positioning and changes it to be more "natural". While not all users will respond in this way, many will (of course, it depends on the particular signal, this just being one example), and the user response can be used individually or it can be combined with other user responses to make an overall liveness determination.

In connection with this exemplary signal, ILAS 100 may assess liveness based on the use of face detection technology, facial key points detection technology, iris detection technology and any combination thereof as well as other known applications for assessing eye movement. One such application that may be used in connection with the system and process of the present invention for the aforementioned functionality is Google MediaPipe available at: https://ai.google.dev/edge/mediapipe/solutions/guide.

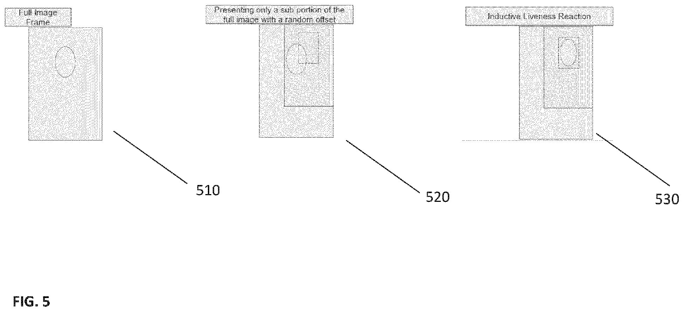

Yet another example of an inductive liveness signal that can be used in connection with the teachings of the present invention is shown and discussed with respect to Fig. 5. In this case an adjustment to random initial offset in a video or still frame by the user is used as a basis for determination of likely liveness. At an initial state 510, a user's face is displayed on the screen. ILAS 100 then causes only a portion of the user's face to appear in the guiding box (state 520) by purposely offsetting the user's face from the guiding box even if the camera is actually centered or otherwise at a correct, direct angle. Most users, seeing this, will instinctively move their face/head relative to the camera lens to adjust such that their face/head is centered prior to taking a selfie and/or in connection with an ongoing video stream (state 530).

This type of signal may be implemented in various different ways. As noted, the deliberate offsetting technique can be used either as part of a still frame selfie or with an ongoing video stream. Also, the offset can occur in any direction (up, down, right, left, diagonal, etc.). Similarly, the offset can be on a linear basis (e.g. move right or left) or could be on rotation basis (e.g. the apparent camera angle appears rotated 10 degrees from a direct angle with the user's face). Many different combinations can be used as part of a single signal and tested as such. Similarly, many different combinations can be used to comprise a set of signals and responses and tested in an aggregate manner.

Other signal types are also possible while remaining within the scope and spirit of the present invention. For example, it is possible for ILAS 100 to cause display screen brightness and/or background color to change fairly rapidly. **In** this case, human nature and physiology tends to case people to adjust to these changes by blinking, looking away or otherwise changing what can be observed by device camera in response to the stimuli. For instance, a short flash or dimming effect can evoke natural blinking or other "micro-reactions" that serve to indicate the presence of a live person. Of course, other signal types are also possible including any for which an expected reaction to some audio, video, tactile or other manifestation is measured against an actual reaction by the user for the purpose of assessing the likelihood of liveness.

The present embodiments are not limited to the particular embodiments illustrated in the drawings and described above in detail. Those skilled in the art will recognize that other arrangements could be devised. The present embodiments encompass every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application While the present embodiments have been described with reference to specific illustrative embodiments, modifications and variations of the present embodiments may be constructed without departing from the spirit and scope of the present embodiments as set forth in the following claims.

While the present embodiments have been described in the context of the embodiments explicitly discussed herein, those skilled in the art will appreciate that the present embodiments are capable of being implemented and distributed in the form of a computer-usable medium (in a variety of forms) containing computer-executable instructions, and that the present embodiments apply equally regardless of the particular type of computer-usable medium which is used to carry out the distribution. An exemplary computer-usable medium is coupled to a computer such the computer can read information including the computer-executable instructions therefrom, and (optionally) write information thereto. Alternatively, the computer-usable medium may be integral to the computer. When the computer-executable instructions are loaded into and executed by the computer, the computer becomes an apparatus for practicing the embodiments. For example, when the computer-executable instructions are loaded into and executed by a general-purpose computer, the general-purpose computer becomes configured thereby into a special-purpose computer. Examples of suitable computer-usable media include: volatile memory such as random access memory (RAM); nonvolatile, hard-coded or programmable-type media such as read only memories (ROMs) or erasable, electrically programmable read only memories (EEPROMs); recordable-type and/or re-recordable media such as floppy disks, hard disk drives, compact discs (CDs), digital versatile discs (DVDs), etc.; and transmission-type media, e.g., digital and/or analog communications links such as those based on electrical-current conductors, light conductors and/or electromagnetic radiation.

Although the present embodiments have been described in detail, those skilled in the art will understand that various changes, substitutions, variations, enhancements, nuances, gradations, lesser forms, alterations, revisions, improvements and knock-offs of the embodiments disclosed herein may be made without departing from the spirit and scope of the embodiments in their broadest form.

## Claims

1. A system configured to make liveness determinations based on human user interaction captured by a user device, the system comprising:
one or more processors configured to execute computer program modules comprising a first model and a physical storage capability;
a signal presentation computer program module operative to present at least one signal to said user device;
a response analysis computer program module operative to analyze said human user interaction responsive to said at least one signal and generate a signal response analysis;
a liveness assessment computer program module operative to make a liveness determination based upon said signal response analysis;
wherein said signal comprises an inductive prompt which does not expressly instruct said human user interaction.

2. The system of claim 1 further comprising a verification reporting computer program module operative to report said liveness determination to one or more downstream systems.

3. The system of claim 1 or claim 2 wherein said response analysis computer program module analyzes said human interaction responsive to a single signal and generates a signal response analysis thereto, and optionally wherein said liveness assessment computer program module makes said liveness determination based upon a plurality of signal response analyses generated by said response analysis computer program module.

4. The system of any preceding claim wherein said signal presentation computer program module presents signals to said user device serially during a liveness assessment transaction.

5. The system of any of claims 1 to 3 wherein said signal presentation computer program module presents signals to said user device in parallel during a liveness assessment transaction.

6. The system of any preceding claim wherein said signal presentation computer program module determines signals to present to said user device based upon at least one signal response analysis generated as a response of previous signals presented to said user device.

7. The system of any preceding claim wherein said user device comprises a smartphone.

8. The system of any preceding claim wherein said signal comprises a visual cue seeking to evoke a human interaction comprising an eye movement.

9. The system of any preceding claim wherein said signal comprises an audio stimulus, and optionally wherein said visual cue comprises the movement of an element on a display screen of said user device.

10. A computer-implemented method of making liveness determinations based on human user interaction captured by a user device, the method being implemented in a computer system comprising one or more processors configured to execute computer program modules, the method comprising the steps of:
presenting at least one signal to said user device;
analyzing said human user interaction responsive to said at least one signal and generating a signal response analysis; and
making a liveness determination based upon said signal response analysis;
wherein said signal comprises an inductive prompt which does not expressly instruct said human user interaction.

11. The method of claim 10 further comprising the step of reporting said liveness determination to one or more downstream systems and/or further comprising the step of analyzing said human interaction responsive to a single signal and generating a signal response analysis thereto, and optionally wherein said liveness determination is based upon a plurality of signal response analyses.

12. The method of claim 10 or claim 11 wherein said signals are presented to said user device serially during a liveness assessment transaction, or wherein said signals are presented to said user device in parallel during a liveness assessment transaction.

13. The method of any of claims 10 to 12 wherein said signals are presented to said user device based upon at least one signal response analysis generated as a response of previous signals presented to said user device.

14. The method of any of claims 10 to 13 wherein said user device comprises a smartphone, and/or wherein said signal comprises a visual cue seeking to evoke a human interaction comprising an eye movement.

15. The method of any of claims 10 to 14 wherein said signal comprises an audio stimulus, and optionally wherein said visual cue comprises the movement of an element on a display screen of said user device.
